# FASCICULE DE BREVET EUROPEEN

(11) **EP 3 917 310 B1**
(45) Date de publication et mention de la délivrance du brevet: **07.06.2023**
(21) Numéro de dépôt: 20707490.7
(22) Date de dépôt: 28.01.2020
(51) Int. Cl.: A01G 5/06, A01G 31/02

(54) **DISPOSITIF DE STOCKAGE POUR PRODUITS DESTINÉS À ÊTRE IMMERGÉS, SON UTILISATION ET ENSEMBLE DE STOCKAGE CORRESPONDANT**
VORRICHTUNG ZUR LAGERUNG VON UNTERZUTAUCHENDEN PRODUKTEN, IHRE VERWENDUNG UND ENTSPRECHENDE LAGERUNGSANORDNUNG
STORAGE DEVICE FOR PRODUCTS INTENDED TO BE SUBMERGED, USE THEREOF AND CORRESPONDING STORAGE ASSEMBLY

(30) Priorité: 28.01.2019 FR 1900722
(43) Date de publication de la demande: 08.12.2021
(73) Titulaire: ARECO FINANCES ET TECHNOLOGIE - ARFITEC, 06130 Grasse (FR)
(72) Inventeur: GSCHWIND, Michel, 06130 Placassier (FR); DENANS, Alexandre, 06530 Cabris (FR); SORRENTINO, Adrien, 06210 Mandelieu (FR)
(74) Mandataire: Schmidt, Martin Peter
(86) Numéro de dépôt international: PCT/FR2020/000017
(87) Numéro de publication internationale: WO 2020/157398

(56) Documents cités:
- WO-A1-2016/195472
- WO-A1-2018/092142
- CN-A- 108 713 488

## Description

### Domaine technique de l'invention

La présente invention concerne un dispositif permettant le stockage de produits, qui sont destinées à être immergés. Elle concerne également une utilisation de ce dispositif, ainsi qu'un ensemble de stockage comprenant un tel dispositif.

Les produits destinés à être immergés, susceptibles d'être visés par l'invention, sont notamment les produits dits frais, à savoir typiquement les végétaux, tels que des fleurs, des plantes ou encore des herbes fraîches. L'invention trouve également son application à d'autres types de produits, comme par exemple certains fruits et légumes.

Le dispositif de stockage, conforme à l'invention, peut en particulier être placé sur un étal, de manière à immerger au moins en partie les produits exposés à la vente. Ce dispositif de stockage peut également être installé dans des espaces où sont exposés des végétaux, comme par exemple des serres. Ce dispositif trouve également son application, chez des particuliers ou des collectivités.

### Etat de la technique

On connaît déjà différents types de dispositifs de stockage pour végétaux, qui incluent en particulier des bacs de réception. En pratique, ces bacs incluent généralement un réservoir comportant un fond situé à une distance prédéterminée d'un support. Le réservoir est destiné à accueillir l'eau nécessaire à l'immersion, alors que le support reçoit une certaine quantité de terre ou d'un mélange de terre. On peut par ailleurs prévoir que le réservoir est équipé d'un organe de visualisation, tel qu'une bille, permettant à l'utilisateur d'identifier immédiatement le niveau d'eau présent dans ce réservoir.

Ces dispositifs connus présentent cependant certains inconvénients. En particulier, ils nécessitent une attention importante de la part de l'utilisateur. En effet, ce dernier doit contrôler périodiquement que le niveau d'eau présent est suffisant. L'utilisateur doit en outre être attentif à d'éventuels phénomènes de débordement d'eau, en dehors du réservoir. Dans ces conditions, l'utilisateur subit une perte de temps conséquente, ce qui est pénalisant notamment dans le cadre d'une activité commerciale. Par ailleurs, étant donné la nécessité d'un contrôle humain régulier, le maintien d'un niveau d'eau correct n'est pas garanti.

Des dispositifs de ce type sont par exemple connus du document WO 2016/195 472, lequel décrit toutes les caractéristiques du préambule de la revendication 1 annexée. On citera également le document WO 2018/92 142, qui divulgue également un dispositif similaire.

Compte tenu de ce qui précède, un objectif de la présente invention est de remédier, au moins partiellement, aux inconvénients de l'art antérieur évoqués ci-dessus.

Un autre objectif de l'invention est de proposer un tel dispositif, qui peut être mis en oeuvre de manière sensiblement automatique, à savoir un dispositif qui implique une surveillance la plus faible possible, ainsi que des manipulations les moins nombreuses possible de la part d'un utilisateur.

Un autre objectif de l'invention est de proposer un tel dispositif, qui garantit le maintien d'un niveau d'eau approprié de manière à immerger dans des conditions satisfaisantes les produits à traiter.

Un autre objectif de l'invention est de proposer un tel dispositif, qui permet d'accueillir des produits de tailles différentes.

Un autre objectif de l'invention est de proposer un tel dispositif, qui autorise une vidange de l'eau qui peut être mise en oeuvre de façon automatique, ou bien partiellement manuelle.

Un autre objectif de l'invention est de proposer un tel dispositif, qui peut être installé de manière commode sur un étal de vente.

Un autre objectif de l'invention est de proposer un tel dispositif, qui peut être associé de manière judicieuse avec un dispositif de génération de gouttelettes.

### Objets de l'invention

Selon l'invention, au moins un des objectifs ci-dessus est atteint au moyen d'un dispositif de stockage selon la revendication 1 annexée.

Des caractéristiques avantageuses de ce dispositif de stockage font l'objet des revendications 2 à 7 annexées.

L'invention a également pour objet une utilisation d'un dispositif tel que ci-dessus, selon la revendication 8 annexée.

L'invention a également pour objet un ensemble de stockage selon la revendication 9 annexée.

Des caractéristiques avantageuses de cet ensemble de stockage font l'objet des revendications 10 à 12 annexées.

### Description des figures

L'invention va être décrite ci-après, en référence aux dessins annexés, donnés uniquement à titre d'exemples non limitatifs, dans lesquels :
[Fig. 1] est une vue en perspective, illustrant un ensemble de stockage pour des produits destinés à être immergés, comprenant un dispositif de stockage conforme à l'invention.
[Fig. 2] est une vue en perspective, avec arrachement selon une coupe longitudinale, illustrant de manière éclatée les différents éléments constitutifs de l'ensemble représenté à la figure précédente.
[Fig. 3] est une vue en perspective, illustrant le dispositif de stockage sous un angle différent, en particulier les moyens permettant son alimentation en eau, ainsi que l'évacuation de cette eau.
[Fig. 4] est une vue en perspective, analogue à la figure 1, illustrant une variante de l'ensemble de stockage, comprenant en particulier un capot permettant la réception de pots dont la taille est différente de ceux de la figure 1.
[Fig. 5] est une vue de dessus, illustrant une phase initiale de la circulation d'eau dans le dispositif de stockage.
[Fig. 6] est une vue en coupe longitudinale, illustrant une phase suivante de la circulation d'eau dans ce dispositif de stockage.
[Fig. 7] est une vue en coupe longitudinale, illustrant une phase suivante de la circulation d'eau, correspondant au remplissage des différents compartiments du dispositif, ainsi qu'à l'évacuation automatique de cette eau.
[Fig. 8] est une vue en coupe longitudinale, analogue à la figure 7, illustrant une variante d'évacuation manuelle de l'eau hors du dispositif.
[Fig. 9] est une vue de côté d'un flotteur appartenant au dispositif de l'invention, dans une position abaissée où il autorise l'alimentation en eau du dispositif.
[Fig. 10] est une vue de côté du flotteur de la figure 9, dans une position relevée où il interdit l'alimentation en eau du dispositif.
[Fig. 11] est une vue schématique, illustrant l'association du dispositif de stockage conforme à l'invention avec un dispositif de génération de gouttelettes.

### Description détaillée

Le dispositif de stockage conforme à l'invention, lequel est désigné dans son ensemble par la référence 1, comprend tout d'abord un corps 10, formant cuve. Ce corps comporte un fond 12, des parois frontales respectivement arrière 14 et avant 16, ainsi que des parois latérales opposées 18 et 19. La paroi arrière 14 est destinée à être placée de manière surélevée en service, comme on le verra dans ce qui suit. Elle assure l'arrivée d'eau extérieure, de sorte qu'elle est également dénommée paroi amont. Le corps 10 est de forme allongée, X 10 désignant son axe longitudinal et Y 10 son axe transversal.

Différentes cloisons de séparation sont prévues, qui relient les parois latérales 18 et 19. Ces cloisons, qui sont référencées 20A à 20F, s'étendent sur seulement une partie de la hauteur de la cuve. Ces cloisons délimitent des compartiments dits principaux 22A à 22F, destinés à la rétention d'eau comme on le verra ci-dessous, ainsi qu'un compartiment aval 23 dit de régulation. L'altitude de ces cloisons 20 est importante, dans la mesure où elle délimite le niveau d'eau dans un compartiment de rétention donné.

La partie supérieure de chaque cloison est formée par une bande transversale de matière 24, dans laquelle sont creusés des trous 26. Ces derniers reçoivent des filtres, de tout type approprié, qui permettent de filtrer l'eau s'écoulant d'un compartiment à l'autre. Dans l'exemple illustré, on retrouve six cloisons de séparation qui délimitent six compartiments de rétention et un compartiment de régulation. Bien évidemment, on peut prévoir un nombre différent de cloisons et de compartiments. De manière typique, un nombre de compartiments de rétention compris entre 2 et 12, en particulier entre 4 et 8, est avantageux.

Le compartiment de régulation 23, adjacent à la paroi avant 16, coopère avec un insert, formant une rehausse 30 qui est fixée sur le fond 12 du compartiment 23. Cette dernière se compose d'une tôle verticale 32, fixée sur le fond 12 précité par tous moyens appropriés. De manière avantageuse, on prévoit une fixation amovible de la rehausse sur le fond, notamment par emboîtement sur la surface supérieure des cloisons aval 20E et 20F. Comme on le verra dans ce qui suit, cela permet de s'adapter à la réception de différents types de pots.

La partie inférieure de cette tôle 32 est ajourée, de manière à permettre l'écoulement d'eau. Cette tôle se prolonge, vers l'arrière, par un voile 34 à partir duquel s'étendent des parois respectivement avant 36, arrière 38, ainsi que latérales 39 et 40. Le voile supporte également au moins une cloison 42, délimitant des compartiments de rétention secondaires 44A et 44B, s'étendant à une altitude plus élevée que les compartiments principaux 22A à 22F ci-dessus. Dans l'exemple illustré, il est prévu une unique cloison 42, ainsi que deux compartiments secondaires 44A et 44B. Bien évidemment, on peut prévoir un nombre de compartiments secondaires différent, par exemple compris entre 1 et 6. On peut également prévoir que le dispositif conforme à l'invention est dépourvu de tels compartiments secondaires.

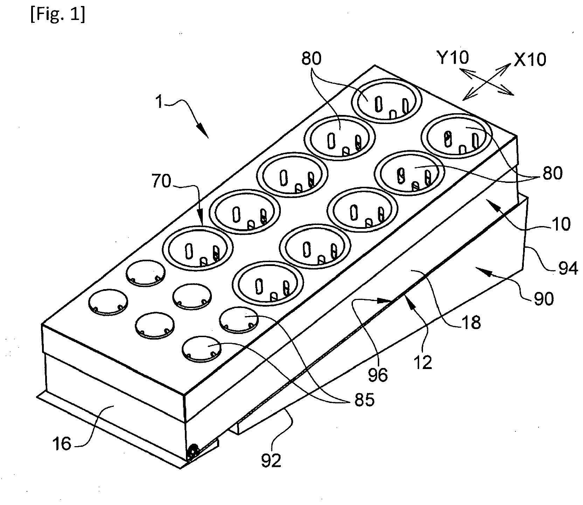

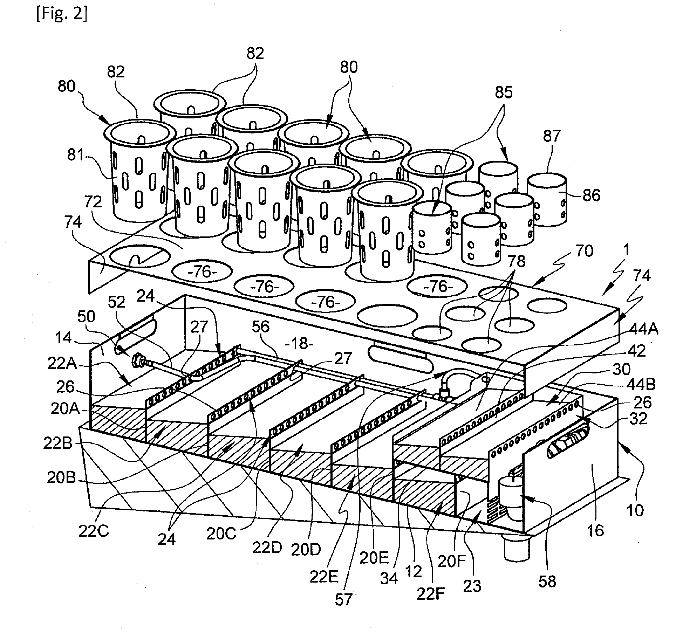

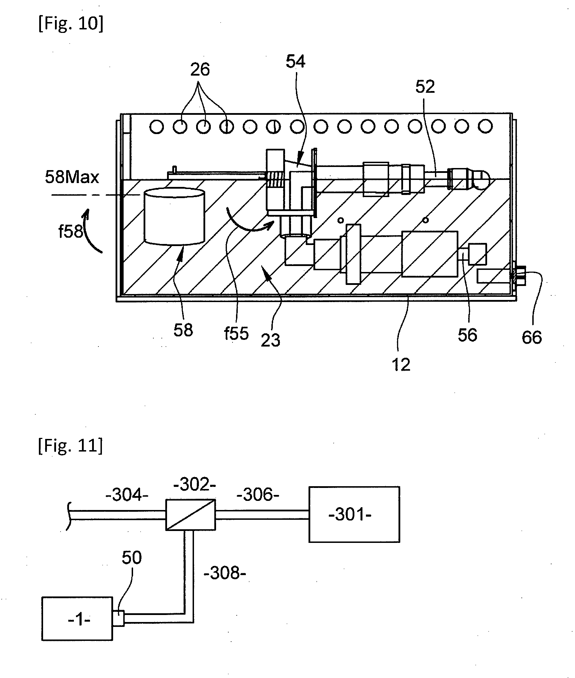

La paroi frontale arrière 14 est équipée au moyen d'un connecteur 50 d'alimentation en eau, dont la structure est connue en soi. Ce connecteur 50 est avantageusement muni d'un clapet anti retour, de manière à éviter les fuites de liquide. Ce connecteur est destiné à coopérer avec une tubulure d'alimentation en eau, qui n'est pas représentée sur les figures 1 à 8, mais uniquement de manière schématique sur la figure 11. Ce connecteur 50 permet l'alimentation d'une conduite dite amont 52, s'étendant d'arrière en avant du corps. Cette conduite 52 débouche dans une vanne 54, placée dans le compartiment de régulation 23, laquelle communique à son tour avec une conduite dite aval 56. Cette dernière, qui s'étend d'avant en arrière du corps, débouche dans le compartiment de rétention amont 22A.

Ces conduites sont maintenues mécaniquement, grâce aux différentes cloisons de séparation. De façon plus précise, elles s'étendent dans des passages 27, ménagés dans les bandes 24 au voisinage des trous de filtration. Il est en outre prévu une conduite supplémentaire 57, dite secondaire, laquelle est raccordée sur la conduite aval 56 et débouche dans le compartiment secondaire amont 44A. La vanne 54, de type connu en soi, ne sera pas décrite en détail dans ce qui suit. Elle est équipée d'un clapet 55, représenté de manière schématique, mobile entre une position d'ouverture dans laquelle il permet l'écoulement de liquide dans la vanne, et une position de fermeture dans laquelle il interdit cet écoulement.

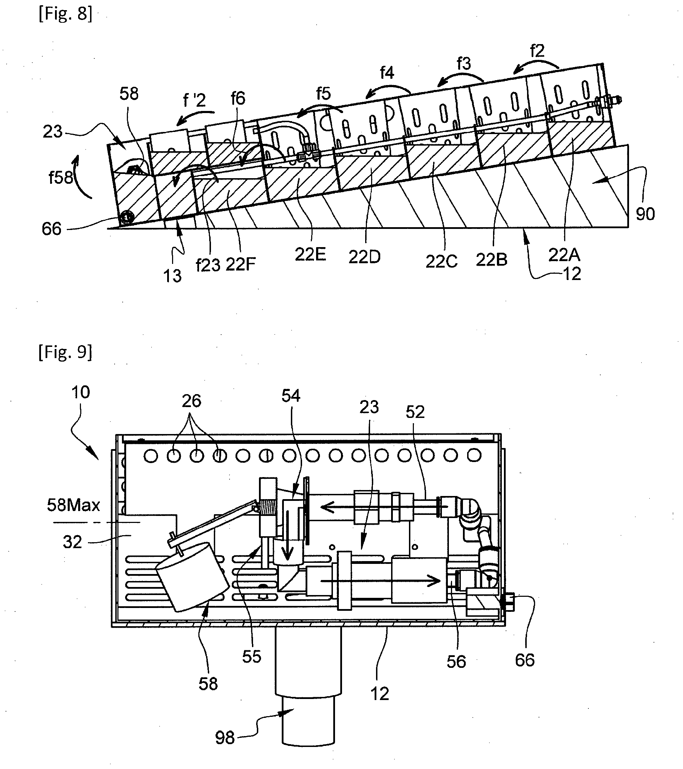

Le dispositif conforme à l'invention comprend en outre un flotteur 58, de type connu en soi. Ce flotteur, qui est monté pivotant sur un support non représenté, permet la régulation de l'alimentation en eau comme le montrent notamment les figures 9 et 10. À cet effet, lorsque ce flotteur se situe à une altitude inférieure à un seuil prédéterminé 58Max, il n'agit pas sur le clapet 55. Ce dernier se trouve alors dans sa position d'ouverture, comme cela est illustré sur la figure 9, de sorte que l'eau s'écoule librement de la conduite 52 vers la conduite 56. En revanche, lorsque l'altitude de ce flotteur 58 dépasse ce seuil, il actionne le clapet 55 de sorte que ce dernier adopte sa position de fermeture illustrée sur la figure 10. Dans ces conditions, l'eau ne peut s'écouler de la conduite amont 52 en direction de la conduit aval 56. Puis, si l'altitude du flotteur diminue à nouveau de manière à passer au-dessous du seuil précité, le clapet 55 retrouve sa position d'ouverture, par exemple grâce à des moyens de rappel non représenté, de sorte que l'eau s'écoule à nouveau dans la conduite aval 56.

Au sens de l'invention le connecteur 50 forme, avec les conduites respectivement amont 52 et aval 56, des moyens d'alimentation en liquide. Ces moyens d'alimentation possèdent une configuration dite active, correspondant à la figure 9, dans laquelle ils autorisent l'écoulement d'eau dans les différents compartiments de rétention. Ces moyens d'alimentation présentent également une configuration dite inactive, correspondant à la figure 10, dans laquelle ils interdisent cet écoulement.

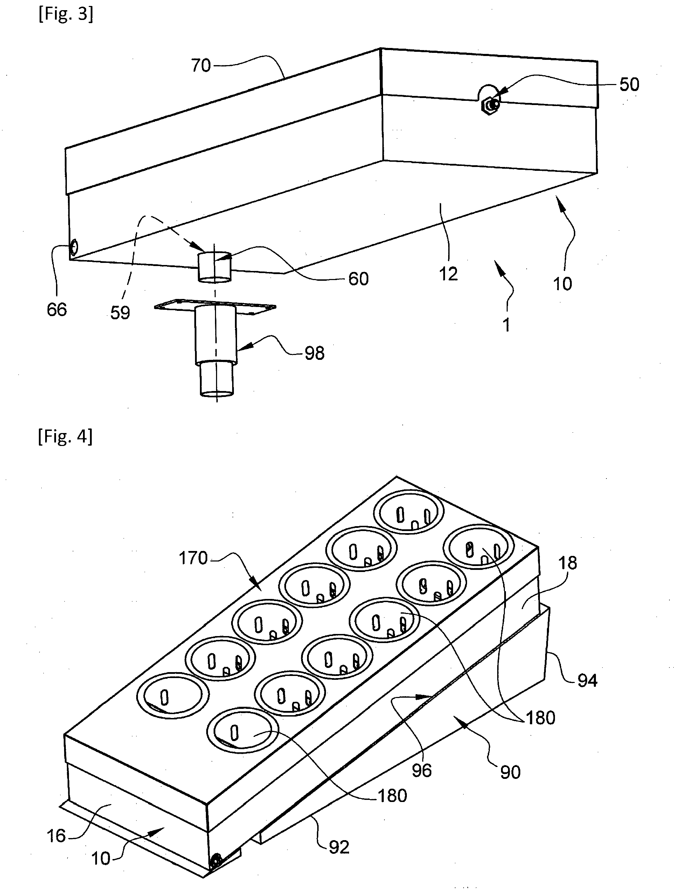

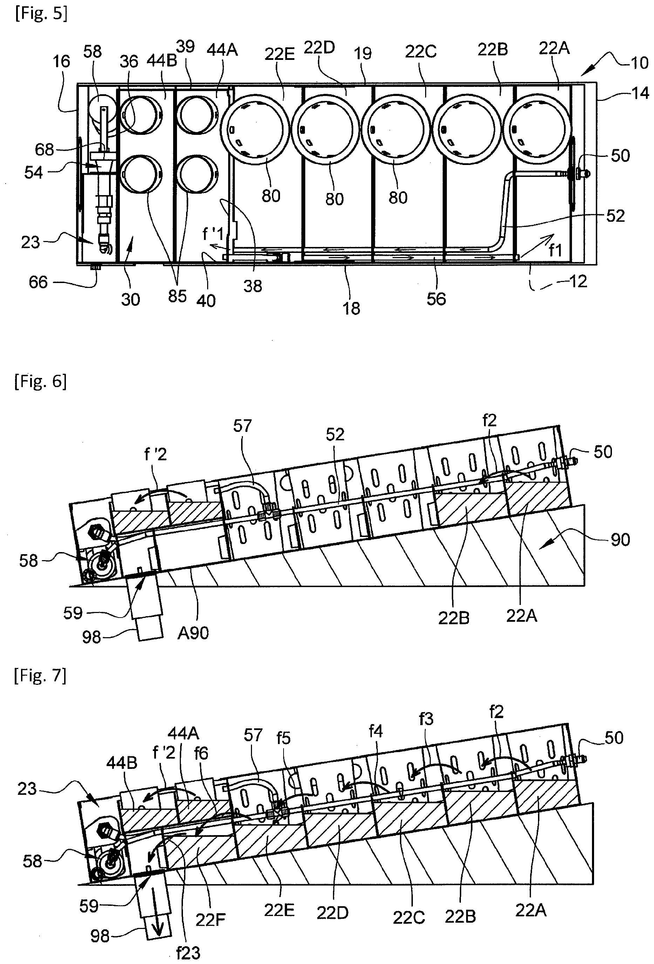

Dans un premier mode de réalisation, illustré notamment sur la figure 7, le fond 12 du compartiment de régulation 23 est creusé d'une ouverture 59 d'évacuation gravitaire. Cette dernière est ménagée dans un col 60, faisant saillie vers le bas à partir du fond 12, comme cela est visible sur la figure 3. Le col 60 peut être remplacé par un insert 13, qui assure la fermeture du fond. Dans ce second mode de réalisation, illustré sur la figure 8, le fond 12 est donc plein. De manière avantageuse, le col et l'insert peuvent être fixés de manière amovible sur le fond 12, de façon à pouvoir être interchangés. Enfin, la paroi latérale du compartiment aval est équipée d'un bouchon 66, qui permet une vidange manuelle comme on le verra dans ce qui suit.

Le volume intérieur de la cuve 10 peut être fermé au moyen d'un capot 70, qui possède une paroi supérieure 72 ainsi que différents flancs 74, lesquelles sont destinées à coiffer les parois latérales de la cuve. Le capot 70 et la cuve 10 sont mutuellement fixés par tous moyens appropriés, de préférence amovible. On peut prévoir une fixation par emboîtement, éventuellement complétée par des moyens d'encliquetage de type classique, qui ne sont pas représentés.

La paroi supérieure 72 est percée de différents orifices 76,78, permettant l'insertion de pots 80,85. Chaque pot, qui est destiné à la réception d'un végétal respectif, non représenté sur les figures, comporte un fût 81,86 principal dont le fond est fermé. En revanche, les parois latérales du fût sont ajourées, de manière à assurer le passage de l'eau en direction du végétal reçu dans le pot. Le fût précité est prolongé par une collerette supérieure 82,87, permettant l'appui du pot sur le pourtour de chaque orifice 76,78. Le capot 70 maintient par conséquent les différents pots 80,85 par rapport au corps 10, de sorte que les végétaux reçus dans ces pots sont susceptibles d'être immergés dans le liquide contenu dans les compartiments de rétention.

De manière avantageuse, on peut prévoir plusieurs types de capots, qui sont pourvus d'orifices dont la taille et/ou le nombre sont différents. Ainsi, dans le mode de réalisation représentée, les orifices 76 présentent une section transversale supérieure à celle des orifices 78, les pots 85 étant plus petits que ceux 80. À titre de variante, comme le montre la figure 4, on peut prévoir un capot 170 percé de plusieurs orifices 176 de même section, destinés à la réception de pots 180 de même taille. Par conséquent, on peut adapter sur une cuve unique plusieurs capots, susceptibles d'être interchangés de façon amovible. De cette manière, il est possible de stocker des produits de types différents, en particulier de tailles différentes.

On notera que la rehausse 30 est disposée en regard des orifices 78 de petite taille. En effet, ces orifices permettent la réception de pots de faible hauteur, qui ne peuvent pas tremper dans les compartiments principaux. La présence de cette rehausse délimite avantageusement les compartiments secondaires décrits ci-dessus, dont l'altitude plus élevée permet le trempage de ces pots de faible hauteur. Dans le cas où on dispose l'autre capot 170 sur la cuve, les pots stockés ont une hauteur identique. Dans ce cas, on enlève la rehausse de sorte que le compartiment principal 22F puisse également recevoir des pots.

Le dispositif de stockage, décrit ci-dessus, coopère avantageusement avec un support 90 qui présente globalement une forme triangulaire, vue de côté. Ce support 90 constitue typiquement tout ou partie d'un meuble ou d'un étal, permettant la visualisation des produits en vue de leur vente. Ce support comporte une embase 92, une paroi arrière 94, ainsi qu'un plan incliné 96 destiné à supporter le fond de la cuve 10. Le caractère incliné du support permet une meilleure présentation des produits, en ce qu'il assure une visibilité satisfaisante pour les acheteurs potentiels.

La fixation mutuelle de la cuve et du support, est avantageusement de type amovible. Cette fixation peut notamment être assurée grâce à un réceptacle d'évacuation 98, illustré sur la figure 3, qui communique avec le col d'évacuation 60 appartenant au dispositif de stockage 1. Dans ce cas ce col et ce réceptacle sont par exemple emboîtés mutuellement, ce qui permet la fixation précitée. L'angle d'inclinaison, noté A90, est avantageusement compris entre 10 et 30°. On peut prévoir un angle d'inclinaison plus élevée, pouvant aller jusqu'à 45°. On peut également prévoir que le support n'est pas incliné, auquel cas l'angle A90 est nul. De manière avantageuse, on peut prévoir plusieurs supports, dont les angles d'inclinaison sont différents. Cela permet de modifier la différence d'altitudes, existant entre les compartiments voisins du dispositif de stockage.

On va maintenant expliquer l'utilisation du dispositif de stockage, qui a été décrit ci-dessus. On notera tout d'abord que, lorsque ce dispositif se trouve sur le support incliné 90, les compartiments de rétention d'eau 22 sont situés à des altitudes différentes. En d'autres termes, cette altitude diminue de manière continue depuis le compartiment amont 22A en direction du compartiment aval 22F. Dans une première phase de l'utilisation, on raccorde le connecteur 50 d'alimentation avec la tubulure d'arrivée mentionnée ci-dessus. L'eau s'écoule alors successivement dans la conduite amont 52, la vanne 54 qui se trouve en position d'ouverture, puis dans la conduite aval 56 et la conduite secondaire 57. Cette eau ressort ensuite de ces conduites 56 et 57, de manière à remplir le compartiment principal amont 22A et le compartiment secondaire amont 44A (voir les flèches f1 et f'1).

Le niveau d'eau dans ces compartiments augmente alors, jusqu'à ce que cette eau atteigne l'extrémité supérieure des cloisons délimitant respectivement ces 2 compartiments. Cette eau s'écoule alors dans les trous 26, en étant filtrée, ce qui permet de retenir les impuretés telles que des feuilles. Cette eau remplit alors les compartiments immédiatement en aval, à savoir 22B et 44B (voir les flèches f2et f'2) puis, de proche en proche, s'écoule jusque dans le compartiment 22F (voir les flèches f3 à f6). Comme le montre la figure 7, les niveaux d'eau maximaux décroissent régulièrement depuis le compartiment amont vers le compartiment aval.

L'eau pénètre alors dans le compartiment de régulation 23, en débordement depuis les compartiments aval 22F et 44B (voir la flèche f23). Dans le cas où il est prévu une ouverture d'évacuation gravitaire 59, à savoir le mode de réalisation de la figure 7, l'eau s'écoule en dehors du dispositif par le col 60, puis dans le réceptacle 98. Dans le cas où cet écoulement d'eau se déroule sans problèmes majeurs, le niveau d'eau dans le compartiment 23 n'augmente sensiblement pas. Par conséquent le flotteur reste globalement à son altitude initiale, de sorte qu'il ne coupe pas l'alimentation. Ce mode de réalisation fait donc appel à une alimentation continue en eau. En revanche, en cas de problème tel qu'une obstruction au niveau de l'évacuation, l'eau monte dans ce compartiment 22F, de manière à faire également remonter le flotteur (voir la flèche f58). Lorsque ce dernier atteint le niveau prédéterminé 58Max, qui a été décrit ci-dessus, il fait basculer le clapet 55 (voir la flèche f55), de manière à fermer la vanne 54. Il n'y a alors plus d'écoulement d'eau dans la conduite aval ni dans les compartiments de rétention, ce qui évite tout risque de fuite majeure.

Dans le cas où le fond du compartiment de régulation 23 est plein, à savoir le mode de réalisation de la figure 8, les différents compartiments de rétention se remplissent d'abord progressivement, comme cela a été décrit ci-dessus. Lorsque l'eau atteint son niveau maximal dans le compartiment aval 22F, elle s'écoule dans le compartiment de régulation 23, ce qui a tendance à faire remonter le flotteur. Lorsque ce dernier atteint le niveau prédéterminé 58Max, il fait basculer le clapet 55 ce qui stoppe l'arrivée d'eau dans la conduite d'alimentation aval 56 comme expliqué ci-dessus. Par conséquent, il n'y a plus d'arrivée d'eau dans les compartiments de rétention, ce qui évite également toute fuite substantielle. Puis le niveau d'eau dans les compartiments, aussi bien de rétention que de régulation, a tendance à baisser notamment sous l'effet de l'évaporation. Dans ces conditions, le flotteur 58 descend jusqu'à repasser au-dessus du niveau 58 Max. Il y a alors à nouveau ouverture de la vanne grâce au rappel du clapet dans sa position de la figure 9, de manière à assurer une arrivée d'eau supplémentaire dans les compartiments.

Comme cela ressort de ce qui précède, l'invention présente de nombreux avantages. Elle permet une utilisation efficace, tout en restreignant les manipulations nécessaires à sa mise en aeuvre.

De manière typique, en début de service, l'utilisateur raccorde la tubulure d'arrivée d'eau sur le connecteur 50. Puis le fonctionnement du dispositif est assuré de manière sensiblement automatique, en particulier grâce aux moyens de régulation. Dans ces conditions, tout débordement significatif de liquide est empêché. Par ailleurs, les moyens de régulation permettent d'assurer avantageusement le maintien d'un niveau d'eau maximal dans les compartiments de rétention.

En fin de service, l'utilisateur vide le cas échéant l'eau par le bouchon de vidange manuelle, dans le mode de réalisation de la figure 8. Puis il désolidarise la tubulure d'arrivée d'eau, par rapport au connecteur 50.

On notera également que le fait de placer le dispositif sur un plan incliné présente des avantages spécifiques. En effet, cette configuration permet de contrôler de manière précise le niveau d'eau, au sein de chaque compartiment de rétention. Ce mode de réalisation faisant intervenir un support incliné, tel celui 90 illustré sur les figures, est un mode de réalisation préféré. Néanmoins, comme indiqué ci-dessus, l'invention trouve également son application à un dispositif de stockage reposant sur un support plan horizontal, à savoir non incliné.

La figure 11 illustre une variante avantageuse de l'invention, dans laquelle l'ensemble de stockage inclut en outre un dispositif de génération de gouttelettes, combiné au dispositif de stockage tel que décrit ci-dessus. Ce dispositif de génération de gouttelettes, désigné dans son ensemble par la référence 301, est de type connu en soi. De façon habituelle il est associé à un filtre 302, auquel est raccordée une arrivée d'eau principale 304. En aval du filtre, il est prévu une conduite 306, dans laquelle circule l'eau filtrée. Cette dernière permet l'alimentation du dispositif 301.

Par ailleurs, de l'eau non filtrée circule dans une conduite supplémentaire 308, en aval du filtre 302. Cette conduite 308 est raccordée au connecteur d'alimentation 50 du dispositif de stockage 1, conforme à l'invention. On notera que, même si cette eau non filtrée n'est pas appropriée pour l'alimentation d'un dispositif de génération de gouttelettes, elle est tout à fait adaptée pour l'alimentation du dispositif de stockage conforme à l'invention. Dans ces conditions, l'invention autorise une valorisation judicieuse de cette eau non filtrée, qui est classiquement rejetée.

De façon avantageuse, on peut prévoir que le dispositif de génération 301 est adapté pour rafraîchir les produits, reçus dans le dispositif de stockage conforme à l'invention. Dans ce cas les moyens de diffusion, appartenant à ce dispositif de génération, débouchent en regard de la cuve du dispositif de stockage.

L'invention est limitée par les revendications annexées. À titre de variante supplémentaire, non illustrée sur les figures et qui n'est pas selon la invention on peut prévoir que le corps du dispositif de stockage est réalisé en un matériau alimentaire et hydrophobe. Par ailleurs ce corps peut être équipé d'un système de nettoyage, de tout type approprié. On citera notamment des lampes à rayons ultraviolets, ou encore un système par choc thermique. On peut également prévoir que le débit de liquide, en entrée du dispositif de stockage, est piloté au moyen d'une électrovanne coopérant avec un capteur et une électronique de contrôle.

Selon une autre variante avantageuse, également non représentée, on peut prévoir plusieurs dispositifs de stockage conformes à l'invention, qui sont placés en parallèle. En substance, les différentes entrées de liquide de ces dispositifs peuvent alors être alimentées au moyen d'une unique tubulure d'arrivée. Dans cet esprit cette tubulure est terminée par différentes dérivations, dont chacune alimente un dispositif de stockage correspondant.

## Revendications

1. Dispositif (1) de stockage pour produits destinés à être immergés, en particulier des végétaux tels que des fleurs, des plantes et des herbes fraîches, ainsi que des fruits et légumes, ce dispositif comprenant
un corps (10) formant cuve
ce corps comprenant des cloisons (20) s'étendant sur une partie seulement de la hauteur de la cuve, de façon à délimiter des compartiments de rétention de liquide dits principaux (22),
des moyens de maintien (70,170), aptes à maintenir des pots (80, 85) de réception desdits produits par rapport au corps (10), de sorte que des produits reçus dans ces pots peuvent être au moins en partie immergés dans du liquide contenu dans les compartiments de rétention,
des moyens d'alimentation en liquide (50, 52, 56, 57), possédant une configuration active dans laquelle ils permettent le remplissage de chaque compartiment, ainsi qu'une position inactive dans laquelle ils interdisent ce remplissage,
des moyens (54, 58) de régulation, aptes à réguler les moyens d'alimentation en liquide ce dispositif étant **caractérisé en ce que** les moyens de régulation comprennent un organe de régulation (58), reçu dans un compartiment dit de régulation (23), cet organe de régulation étant apte à faire passer les moyens d'alimentation de leur configuration active à leur configuration inactive, lorsque le niveau de liquide dans ce compartiment de régulation dépasse un seuil prédéterminé (58Max).

2. Dispositif selon la revendication précédente, dans lequel l'organe de régulation (58) est apte à faire passer les moyens d'alimentation de leur configuration inactive à leur configuration active, lorsque le niveau de liquide dans ce compartiment de régulation passe au-dessous dudit seuil prédéterminé (58Max).

3. Dispositif selon la revendication 1 ou 2, dans lequel les moyens d'alimentation comprennent une conduite d'alimentation amont (52) débouchant dans le compartiment de régulation, une conduite d'alimentation aval (56) s'étendant depuis le compartiment de régulation en direction des compartiments de rétention, ainsi qu'une vanne (54) prévue entre cette conduite amont et cette conduite aval, l'organe de régulation étant un flotteur (58) apte à faire passer cette vanne dans une position respectivement d'ouverture ou de fermeture.

4. Dispositif selon l'une des revendications précédentes, dans lequel ce dispositif comprend une rehausse (30) fixée sur le fond, laquelle est destinée à former au moins un compartiment de rétention secondaire (44), situé à une altitude supérieure à celle des compartiments de rétention principaux (22).

5. Dispositif selon l'une des revendications précédentes, dans lequel ce dispositif comprend des moyens de vidange gravitaire du liquide, notamment une ouverture (59) ménagée dans le fond du compartiment de régulation.

6. Dispositif selon l'une des revendications précédentes, dans lequel ce dispositif comprend des moyens de vidange manuelle du liquide, en particulier un bouchon de vidange (66).

7. Dispositif selon l'une des revendications précédentes, dans lequel les moyens de maintien comprennent au moins un capot (70,170) destiné à obturer le volume intérieur de la cuve, ce capot étant creusé d'orifices (76,78 ; 176) permettant l'insertion des pots (80,85) de réception desdits produits,

8. Utilisation d'un dispositif selon l'une quelconque des revendications précédentes, dans laquelle on place le corps (10) sur un support incliné (90), de sorte que le sommet de chaque compartiment est situé à une altitude supérieure à celle du compartiment aval immédiatement adjacent.

9. Ensemble de stockage comprenant au moins un dispositif de stockage (1) conforme à l'une des revendications 1 à 7, ainsi qu'au moins un support (90), chaque support présentant un plan incliné d'appui du fond du dispositif.

10. Ensemble de stockage selon la revendication précédente, comprenant plusieurs dispositifs de stockage placés en parallèle, les moyens d'alimentation en liquide de ces dispositifs de stockage étant mis en communication avec une arrivée de liquide commune.

11. Ensemble de stockage selon la revendication 9 ou 10, comprenant en outre un dispositif de génération de gouttelettes (301), des moyens d'arrivée d'eau (304), des moyens de filtration (302) de cette eau, des moyens d'écoulement (306) d'eau filtrée débouchant dans le dispositif de génération de gouttelettes, ainsi que des moyens d'écoulement d'eau non filtrée (308) débouchant dans les moyens d'alimentation en liquide (50,52, 56) du dispositif de stockage.

12. Ensemble de stockage selon la revendication précédente, dans lequel le dispositif de génération de gouttelettes (301) est équipé de moyens de diffusion de gouttelettes, lesquels débouchent en regard de la cuve (10) d'au moins un dispositif de stockage (1), de manière à humidifier les produits reçus dans le dispositif de stockage.

## Patentansprüche

1. Vorrichtung zur Lagerung (1) von Produkten, die zum Untertauchen bestimmt sind, insbesondere von Gewächsen, wie Blumen, Pflanzen und frischen Kräutern, sowie Früchten und Gemüse, wobei diese Vorrichtung umfasst einen Körper (10), der einen Behälter bildet wobei dieser Körper Wände (20) umfasst, die sich nur über einen Teil der Höhe des Behälters erstrecken, um sogenannte Hauptflüssigkeitsrückhaltefächer (22) zu begrenzen, Haltemittel (70, 170), die imstande sind, Töpfe (80, 85) zum Aufnehmen der Produkte in Bezug auf den Körper (10) zu halten, sodass Produkte, die in diesen Töpfen aufgenommen sind, mindestens teilweise in Flüssigkeit, die in den Rückhaltefächern enthalten ist, untergetaucht sein können, Mittel zur Flüssigkeitsversorgung (50, 52, 56, 57), die eine aktive Konfiguration, in der sie das Füllen eines jeden Faches ermöglichen, sowie eine inaktive Position besitzen, in der sie dieses Füllen untersagen, Regelungsmittel (54, 58), die imstande sind, die Mittel zur Flüssigkeitsversorgung zu regeln, wobei diese Vorrichtung **dadurch gekennzeichnet ist, dass** die Regelungsmittel ein Regelungsorgan (58) umfassen, das in einem sogenannten Regelungsfach (23) aufgenommen ist, wobei dieses Regelungsorgan imstande ist, die Mittel zur Versorgung von ihrer aktiven Konfiguration in ihre inaktive Konfiguration übergehen zu lassen, wenn das Flüssigkeitsniveau in diesem Regelungsfach eine vorbestimmte Schwelle (58Max) übersteigt.

2. Vorrichtung nach dem vorstehenden Anspruch, wobei das Regelungsorgan (58) imstande ist, die Mittel zur Versorgung von ihrer inaktiven Konfiguration in ihre aktive Konfiguration übergehen zu lassen, wenn das Flüssigkeitsniveau in diesem Regelungsfach die vorbestimmte Schwelle (58Max) unterschreitet.

3. Vorrichtung nach Anspruch 1 oder 2, wobei die Mittel zur Versorgung eine stromaufwärts liegende Versorgungsleitung (52) umfassen, die in das Regelungsfach mündet, eine stromabwärts gelegene Leitung (56), die sich aus dem Regelungsfach in Richtung der Rückhaltefächer erstreckt, sowie ein Ventil (54), das zwischen dieser stromaufwärts gelegenen Leitung und dieser stromabwärts gelegenen Leitung vorgesehen ist, wobei das Regelungsorgan ein Schwimmer (58) ist, der imstande ist, dieses Ventil jeweils in eine Öffnungs- oder Schließposition übergehen zu lassen.

4. Vorrichtung nach einem der vorstehenden Ansprüche, wobei diese Vorrichtung einen Aufsatz (30) umfasst, der am Boden befestigt ist, welcher dazu bestimmt ist, mindestens ein Sekundär-Rückhaltefach (44) zu bilden, das sich auf einer Höhe über jener der Hauptrückhaltefächer (22) befindet.

5. Vorrichtung nach einem der vorstehenden Ansprüche, wobei diese Vorrichtung Mittel zum Entleeren der Flüssigkeit durch Schwerkraft, insbesondere eine Öffnung (59) umfasst, die in den Boden des Regelungsfaches eingearbeitet ist.

6. Vorrichtung nach einem der vorstehenden Ansprüche, wobei diese Vorrichtung Mittel zum manuellen Entleeren der Flüssigkeit, insbesondere einen Entleerungsstopfen (66) umfasst.

7. Vorrichtung nach einem der vorstehenden Ansprüche, wobei die Haltemittel mindestens eine Abdeckung (70, 170) umfassen, die dazu bestimmt ist, das Innenvolumen des Behälters zu verschließen, wobei in diese Abdeckung Öffnungen (76, 78; 176) eingelassen sind, die das Einbringen der Töpfe (80, 85) zur Aufnahme der Produkte ermöglichen.

8. Verwendung einer Vorrichtung nach einem der vorstehenden Ansprüche, wobei der Körper (10) auf einem schrägen Träger (90) platziert wird, sodass sich der Scheitelpunkt eines jeden Faches auf einer Höhe über jener des unmittelbar benachbarten, stromabwärts gelegenen Faches befindet.

9. Einheit zur Lagerung, die mindestens eine Vorrichtung zur Lagerung (1) nach einem der Ansprüche 1 bis 7, sowie mindestens einen Träger (90) umfasst, wobei jeder Träger eine schräge Auflageebene für den Boden der Vorrichtung aufweist.

10. Einheit zur Lagerung nach dem vorstehenden Anspruch, die mehrere Vorrichtungen zur Lagerung umfasst, die parallel platziert sind, wobei die Mittel zur Flüssigkeitsversorgung dieser Vorrichtungen zur Lagerung in Verbindung mit einem gemeinsamen Flüssigkeitszulauf gebracht werden.

11. Einheit zur Lagerung nach Anspruch 9 oder 10, die weiter eine Vorrichtung zum Erzeugen von Tröpfchen (301), Wasserzulaufmittel (304), Filterungsmittel (302) für dieses Wasser, Strömungsmittel (306) für gefiltertes Wasser, die in die Vorrichtung zum Erzeugen von Tröpfchen münden, sowie Strömungsmittel für ungefiltertes Wasser (308), die in die Mittel zur Flüssigkeitsversorgung (50, 52, 56) der Vorrichtung zur Lagerung münden, umfasst.

12. Einheit zur Lagerung nach dem vorstehenden Anspruch, wobei die Vorrichtung zum Erzeugen von Tröpfchen (301) mit Mitteln zum Verteilen von Tröpfchen ausgerüstet ist, die gegenüber dem Behälter (10) mindestens einer Vorrichtung zur Lagerung (1) einmünden, um die Produkte, die in der Vorrichtung zur Lagerung aufgenommen werden, zu befeuchten.

## Claims

1. Storage device (1) for products intended to be submerged, in particular vegetation such as flowers, plants and fresh herbs, as well as fruits and vegetables, this device comprising
a body (10) forming a tank,
this body comprising partitions (20) extending over only a part of the height of the tank, so as to define so-called main compartments for retaining liquid (22), maintaining means (70, 170), capable of maintaining pots (80, 85) for receiving said products with respect to the body (10), so that the products received in these pots can be at least partly submerged in liquid contained in the retention compartments,
means for supplying liquid (50, 52, 56, 57), having an active configuration in which they allow the filling of each compartment, as well as an inactive position in which they prohibit this filling,
regulation means (54, 58), capable of regulating the means for supplying liquid,
this device being **characterised in that** the regulation means comprise a regulation member (58), received in a so-called regulation compartment (23), this regulation member being capable of making the supply means go from their active configuration to their inactive configuration, when the level of liquid in this regulation compartment exceeds a predetermined threshold (58Max).

2. Device according to the preceding claim, wherein the regulation member (58) is capable of making the supply means go from their inactive configuration to their active configuration, when the level of liquid in this regulation compartment goes below said predetermined threshold (58Max).

3. Device according to claim 1 or 2, wherein the supply means comprise an upstream supply pipe (52) opening into the regulation compartment, a downstream supply pipe (56) extending from the regulation compartment in the direction of the retention compartments, as well as a valve (54) provided between this upstream pipe and this downstream pipe, the regulation member being a floater (58) capable of making this valve go into an opening or closing position, respectively.

4. Device according to one of the preceding claims, wherein this device comprises a riser (30) fastened onto the bottom, which is intended to form at least one secondary retention compartment (44), located at an altitude greater than that of the main retention compartments (22).

5. Device according to one of the preceding claims, wherein this device comprises means for gravitational draining of the liquid, in particular an opening (59) made in the bottom of the regulation compartment.

6. Device according to one of the preceding claims, wherein this device comprises means for manual draining of the liquid, in particular a drain plug (66).

7. Device according to one of the preceding claims, wherein the maintaining means comprise at least one hood (70, 170) intended to close the inner volume of the tank, this hood being pierced by orifices (76, 78; 176) allowing the insertion of the pots (80, 85) for receiving said products.

8. Use of a device according to any one of the preceding claims, wherein the body (10) is placed on an inclined support (90), so that the top of each compartment is located at an altitude greater than that of the immediately adjacent downstream compartment.

9. Storage assembly comprising at least one storage device (1) according to one of claims 1 to 7, as well as at least one support (90), each support having an inclined plane for supporting the bottom of the device.

10. Storage assembly according to the preceding claim, comprising several storage devices placed in parallel, the means for supplying liquid of these storage devices being placed in communication with a shared liquid inlet.

11. Storage assembly according to claim 9 or 10, further comprising a device for generating droplets (301), water inlet means (304), means for filtering (302) this water, means for flow (306) of filtered water opening into the device for generating droplets, as well as means for flow of non-filtered water (308) opening into the means for supplying liquid (50, 52, 56) of the storage device.

12. Storage assembly according to the preceding claim, wherein the device for generating droplets (301) is equipped with means for diffusion of droplets, which open facing the tank (10) of at least one storage device (1), so as to humidify the products received in the storage device.
